# EUROPEAN PATENT SPECIFICATION

(11) **EP 3 327 264 B1**
(45) Date of publication and mention of the grant of the patent: **31.07.2019**
(21) Application number: 16200693.6
(22) Date of filing: 25.11.2016
(51) Int. Cl.: F01N 3/20

(54) **SYSTEM FOR REDUCING THE AMOUNT OF NITROGEN OXIDES IN THE EXHAUST GAS OF AN INTERNAL COMBUSTION ENGINE**
SYSTEM ZUR VERRINGERUNG DER STICKOXIDMENGE IN DEN ABGASEN EINES VERBRENNUNGSMOTORS
SYSTÈME DE RÉDUCTION DE LA QUANTITÉ D'OXYDES D'AZOTE DANS LE GAZ D'ÉCHAPPEMENT D'UN MOTEUR À COMBUSTION INTERNE

(43) Date of publication of application: 30.05.2018
(73) Proprietor: YARA International ASA, 0277 Oslo (NO)
(72) Inventor: Sonesson, Ola, 429 44 Särö (SE)
(74) Representative: Pappaert, Kris

(56) References cited:
- EP-A1- 2 295 750
- WO-A1-2015/049557
- WO-A2-2011/060792
- US-A- 6 082 102
- US-B1- 6 192 676

## Description

### Technical field

The present application relates to a system and method for reducing the amount of nitrogen oxides in the exhaust gas of an internal combustion engine, more in particular larger diesel engines such as stationary or marine diesel engines.

### Background

Nitrogen oxides (NOₓ) are a well-known class of atmospheric pollutants that pose certain risks to the human health and agriculture. The bulk of atmospheric nitrogen oxides are NO, NO₂ and N₂O, but can also include components such as NO₃ and N₂O₅. Nitrogen oxides are the key components in the formation of photochemical smog, which damages respiratory functions and visibility. Additionally, nitrogen oxides that come into contact with moisture in the atmosphere form nitric acid and thus acidic rain. Nitrogen oxides furthermore are involved in the production of tropospheric ozone. Environmental agencies around the world have therefore instituted standards for nitrogen oxides control in exhaust gases in an effort to reduce the harmful effects thereof.

In order to comply with the regulation of nitrogen oxides, engine manufacturers and engine suppliers have implemented selective catalytic reduction (SCR)-systems that treat the engine exhaust gas after it leaves the engine. These systems are often referred to as "after-treatment systems". In such after-treatment systems, a reducing agent, most commonly an aqueous urea solution ((NH₂)₂CO) is selectively injected into the exhaust gas stream of an engine and absorbed onto a downstream catalyst substrate. The injected urea solution decomposes into ammonia (NH₃), which reacts with nitrogen oxides (NOₓ) in the exhaust gas to form water (H₂O) and diatomic nitrogen (N₂), which both are harmless to the environment. However, because an excess in either the NOₓ or the injected aqueous urea solution may result in undesirable emissions, the dosage of aqueous urea solution injected needs to be carefully controlled.

There already exist NOₓ-reduction systems including an SCR-catalytic converter and a metering assembly for delivery of a reducing agent into exhaust gas under the control of a control system.

In US 6,082,102 for instance, an NOₓ-reduction system for an internal combustion engine operating with excess air is disclosed, comprising an SCR-catalytic converter arranged in an exhaust system of an internal combustion engine, a reducing agent container for storing reducing agent, and a metering device communicating with the reducing agent container for controlled delivery of the reducing agent into the exhaust system upstream of the SCR-catalytic converter in a direction of exhaust gas flow in the exhaust system. The NOₓ-reduction system furthermore comprises a control device assembly integrated in the reducing agent container for controlling the NOₓ-reduction system, wherein the control device assembly is a functional unit comprising a control device and associated sensors and actuators for storing, feeding, conditioning and metering the reducing agent.

In WO 2011/060792 for instance, a system for selective catalytic reduction is described, comprising an inlet of a gas to be catalytically reduced, a control portion to administer an amount of reducing agent to be mixed with the gas to be catalytically reduced, a dosage portion that measures out the amount of reducing agent administered by the control portion, an injection portion that injects the reducing agent into the gas to be catalytically reduced upstream of a catalyst portion that reduces the gas to be catalytically reduced to a reduced gas and an outlet of the reduced gas.

In order to update older and/or less advanced NOₓ reduction systems, exhaust after-treatment systems are often retrofitted. As after-treatment systems however become more complex, retrofitting such systems is also becoming correspondingly difficult. Retrofitting includes necessary hardware as well as software changes in the existing exhaust after-treatment systems, requiring a significant amount of labor and may necessitate multiple tradesmen to retrofit a single system.

Accordingly, it is desirable to provide a NOₓ reduction system for which installation, be it retrofitting or initial manufacturing, is simplified.

In US 6,192,676, a device for reducing a NOₓ-content in exhaust gas of a vehicle internal combustion engine, wherein a control unit is provided and the engine is operated with excess air. The device comprises an exhaust system conducting an exhaust gas flow in an exhaust gas flow direction, an SCR catalytic converter disposed in the exhaust system, a reducing agent metering system including a source of reducing agent and a reducing agent injection valve communicating with the source of reducing agent, wherein the injection valve is disposed to inject reducing agent into the exhaust system upstream of the SCR catalytic converter in the exhaust gas flow direction, a temperature sensor, an NOₓ measuring sensor, and an exhaust gas flow sensor connected to the exhaust system, a reducing agent control unit directly connected to the temperature sensor, to the NOₓ measuring sensor, and to the exhaust gas flow sensor. The reducing agent control unit determines an amount of reducing agent to be injected, from measurements of the temperature sensor, the NOₓ measuring sensor, and the exhaust gas flow sensor without recourse to data available in the control unit of the internal combustion engine, and driving the reducing agent metering system and metering the reducing agent based on the measurement. This US patent does not disclose any consolidation of other after-treatment components then the urea storage container. It is remarked that urea storage containers only represent a small portion of an after-treatment system. Consequently, there remains a need for a simplified after-treatment system configured for a streamlined installation process.

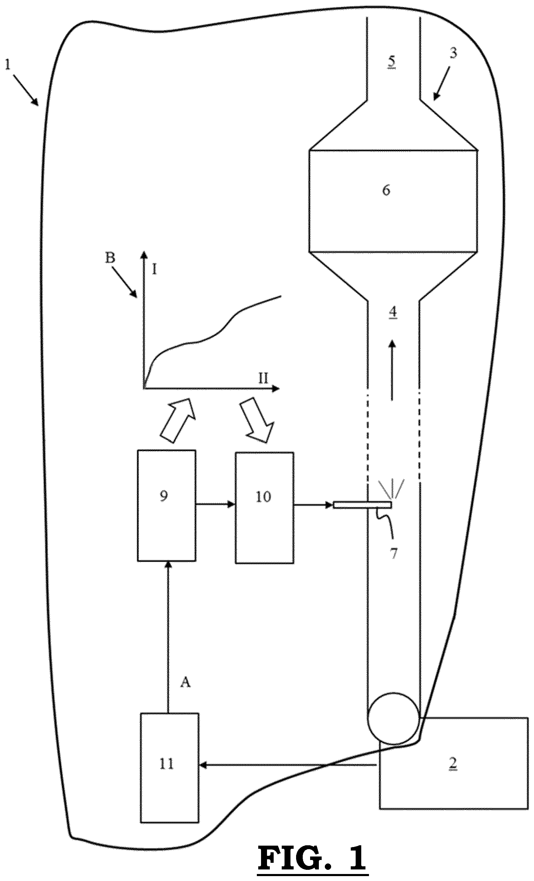

One particular kind of prior art SCR system (1) is shown in FIG. 1. The SCR system (1) is operably connected to an internal combustion engine (2) by means of a machinery system (11) arranged to determine a significant engine load signal (A). An SCR control system (9) receives the significant engine load signal (A). Using a pre-determined mapping (B) of engine load (I) versus optimum reducing agent flow (II), an amount of reducing agent to be injected into the exhaust gas stream is determined. However, in these kinds of prior art systems, actual operating conditions are not taken into account in determining the amount of reducing agent injected in the gas stream. This can result in too little reducing agent injection, which causes excessive NOₓ emissions. Alternatively, it can result in too much reducing agent injection, which leads to excessive reducing agent use and it may even lead to emission of unused reducing agent into the environment (e.g. ammonia slip). Accordingly, there is a need for SCR systems and related methods which allow more accurately regulation of the amount of reducing agent injected in an exhaust gas stream.

### Summary

The systems and methods provided herein alleviate one or more deficiencies of the prior art.

According to one aspect, provided herein is a system for reducing the amount of nitrogen oxides in exhaust gas of an internal combustion engine, comprising
- a selective catalytic reactor system comprising:
   - a selective catalytic reactor arranged to catalytically convert the exhaust gas to a purified exhaust gas by reducing the amount of nitrogen oxides in the exhaust gas using a reducing agent;
   - an exhaust gas inlet to lead exhaust gas from the internal combustion engine into the selective catalytic reactor;
   - an exhaust gas outlet to lead the purified exhaust gas out of the selective catalytic reactor system; and;
   - a nitrogen oxides analyser arranged in the exhaust gas outlet for measuring the amount of nitrogen oxides present in the purified exhaust gas;
- a reducing agent injection system comprising a container for storing reducing agent, an injector for injecting the reducing agent into the selective catalytic reactor system or the exhaust gas inlet of the selective catalytic reactor system thereby contacting the exhaust gas with the reducing agent, and a metering device for controlled injection of the reducing agent into the selective catalytic reactor system or the exhaust gas inlet of the selective catalytic reactor system;
- a machinery system arranged to determine a significant engine load signal; and;
- a process controller receiving information from the machinery system and the nitrogen oxides analyser and sending information to the reducing agent injection system;
wherein the process controller
a) modifies the incoming significant engine load signal based on the measured amount of nitrogen oxides present in the purified exhaust gas, thereby generating a modified engine load signal,
b) maps the modified engine load signal in function of a reference amount of injected reducing agent for a specified nitrogen oxides reduction efficiency; and
c) regulates the amount of reducing agent to be injected based on the results of step (b).

It shall be noted that the terms "control box" and "process controller" as used herein are synonyms and are mutually interchangeable.

Also described herein is a system for reducing the amount of nitrogen oxides in the exhaust gas of an internal combustion engine, the system comprising
- a reducing agent container for storing reducing agent;
- a reducing agent injection system for injecting the reducing agent into the selective catalytic reactor system or the exhaust gas inlet of the selective catalytic reactor system thereby contacting the reducing agent with the exhaust gas, wherein the reducing agent injection system is controlled by a selective catalytic reactor process system;
- a metering device for controlled injection of the reducing agent into the selective catalytic reactor system or the exhaust gas inlet of the selective catalytic reactor system ;
- a selective catalytic reactor system comprising:
   - an exhaust gas inlet to lead the exhaust gas from the internal combustion engine into the selective catalytic reactor system;
   - a selective catalytic reactor arranged to catalytically convert the exhaust gas to a purified exhaust gas by reducing the amount of nitrogen oxides in the exhaust gas using a reducing agent;
   - an exhaust gas outlet to lead the purified exhaust gas out of the selective catalytic reactor-system;
   - a nitrogen oxides analyser arranged in the exhaust gas outlet for measuring the amount of nitrogen oxides present in the purified exhaust gas;
- a machinery system arranged to determine a significant engine load signal;
- a selective catalytic reactor control system arranged for mapping the significant engine load signal versus the amount of injected reducing agent for a specified nitrogen oxides reduction efficiency;
- a control box for modifying the incoming significant engine load signal based on the measurements of the nitrogen oxides analyser into a modified engine load signal.

The engine load is the external mechanical resistance against which the engine acts.

By modifying the incoming significant engine load signal as input to the SCR control system, one or more specific NOₓ-setpoints can be reached.

By providing a control box that modifies the incoming significant engine load signal based on the measurements of the NOₓ-analyser into a modified engine load signal, existing SCR-systems can be retrofitted without the need of a reprogramming of the SCR control system, which is normally very time consuming and sometimes not at all possible.

In an embodiment of a system according to the application, the control box comprises a display arranged to view the significant engine load signal and the modified engine load signal.

In an embodiment of a system according to the application, the nitrogen oxides analyser is arranged for continuously or periodically measuring the amount of nitrogen oxides present in the purified exhaust gas. This allows to minimize the reagent consumption, to avoid undesirable emissions (high NOₓ or high NH₃) and to detect and alert if large deviations in NOₓ reduction process occur. The more frequent the measurement is made, the better.

In a possible embodiment of a system according to the application, the internal combustion engine is a stationary or a marine diesel engine.

Further provided herein is a method for reducing the amount of nitrogen oxides in an exhaust gas of an internal combustion engine. The method comprises the following steps:
a. receiving a nitrogen oxides concentration signal, the nitrogen oxides concentration signal being indicative of a nitrogen oxides concentration in a purified exhaust gas;
b. receiving an incoming significant engine load signal;
c. modifying the incoming significant engine load signal based on the nitrogen oxides measuring signal, thereby obtaining a modified engine load signal;
d. determining an amount of reducing agent to be injected in the exhaust gas of the internal combustion engine based on the nitrogen oxides concentration signal, the modified engine load signal, and a mapping of the modified engine load signal as a function of a reference amount of injected reducing agent for a specified nitrogen oxides reduction efficiency.

In some embodiments, step c comprises the following sub-steps:
ca. comparing the nitrogen oxides concentration in the purified exhaust gas to a reference nitrogen oxides concentration for the incoming significant engine load signal;
cb. if the difference between the nitrogen oxides concentration in the purified exhaust gas and the reference nitrogen oxides concentration is larger than a pre-determined upper value, increasing the modified engine load signal by a pre-determined first amount;
cc. if the difference between the nitrogen oxides concentration in the purified exhaust gas and the reference nitrogen oxides concentration is smaller than a pre-determined lower value, decreasing the modified engine load signal by a pre-determined second amount.

In some embodiments, the mapping comprises a one-to-one relation between the modified engine load signal and urea flow.

In some embodiments, step d is followed by the step:
e. contacting the exhaust gas with a reducing agent according to the amount of reducing agent determined in step d.

In some embodiments, step e comprises injecting a reducing agent into a selective catalytic reactor system or an exhaust gas inlet of the selective catalytic reactor system.

In some embodiments, step a is preceded by the step: measuring the nitrogen oxides concentration in a purified exhaust gas.

In some embodiments, step b is preceded by the step: measuring the significant engine load signal.

In some embodiments, the method is computer-implemented.

Further provided is a computer program product comprising program code instructions for implementing a method provided herein.

Further provided herein is a system configured for executing a method provided herein.

### Description of the figures

FIG. 1 shows a prior art system for reducing the amount of nitrogen oxides in the exhaust gas present in an exhaust gas system of an internal combustion engine.
FIG. 2 shows one embodiment of a system as provided herein for reducing the amount of nitrogen oxides in the exhaust gas present in an exhaust gas system of an internal combustion engine.
FIG. 3 shows a system according to the application for reducing the amount of nitrogen oxides in the exhaust gas present in an exhaust gas system of an internal combustion engine.
FIG. 4 shows a graph of NOx concentration (III) versus reducing agent (urea) flow (IV) for a particular engine load.

Throughout the figures, the following numbering is adhered to: 1 - System; 2 - internal combustion engine; 3 - selective catalytic reduction (SCR)-system; 4 - exhaust gas inlet; 5 - exhaust gas outlet; 6 - selective catalytic reactor; 7 - reducing agent injection system; 8 - NOx analyser; 9 - SCR-control system; 10 - SCR-process system; 11 - machinery system; 12 - control box; 12a - display; A - significant engine load signal; B -mapping; C - modified engine load signal; I - engine load; II - optimum reducing agent flow; III - NOx concentration; IV - reducing agent (urea) flow; α - linear region; β transition region; γ region of ammonia slip.

### Detailed description

A system (1) according to the application for reducing the amount of nitrogen oxides (NOₓ) in the exhaust gas of an internal combustion engine (2) is provided with a selective catalytic reduction (SCR)-system (3). This SCR-system (3) comprises an exhaust gas inlet (4) arranged to lead in exhaust gas to be cleaned from the internal combustion engine (2), as well as an exhaust gas outlet (5) to lead cleaned exhaust gas out of the SCR-system (3). Furthermore, a selective catalytic reactor (6) is provided to catalytically convert the exhaust gas into purified exhaust gas by the reduction of the amount of NOₓ in the exhaust gas using a reducing agent.

The reducing agent used is typically, but not limited to, an aqueous urea solution or an aqueous or anhydrous ammonia. The reducing agent is stored in a reducing agent container (not shown on figure 1). In order to inject the reducing agent into the exhaust gas, a reducing agent injection system (7) is provided.

The amount of reducing agent to be injected is controlled by an SCR-process system (10) and is based on a repetitive significant engine load signal (A) coming from a machinery system (11) and an appurtenant mapping (B) of the engine load (I) versus the optimum reducing agent flow (II). The mapping (B) is done by performing a number of NOₓ emission tests on the engine (2) and SCR-system at various loads and various amounts of reducing agent that is injected. The mapping is first made manually and then programmed into an SCR-control system (9).

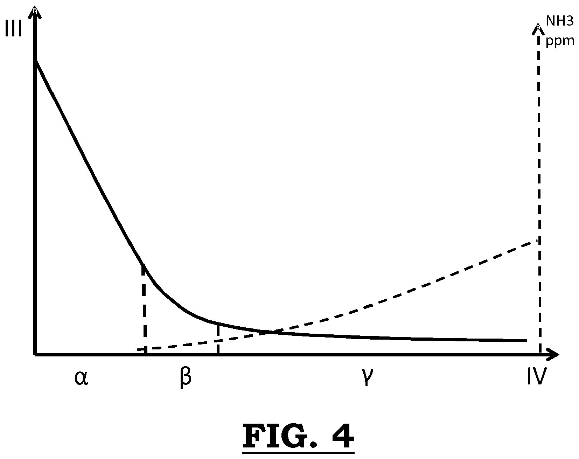

In some embodiments, the mapping is made by selecting optimum NOₓ concentrations (II) from NOₓ concentration (III) - reducing agent flow (IV) pairs for various engine loads (I), and preferably by interpolating between the retrieved optimum NOₓ concentration (II) - engine load (I) data points. A particular graph of NOₓ concentration (III) - reducing agent flow (IV) for a specific engine load is shown in FIG. 4.

In particular embodiments, selection of an optimum reducing agent flow (II) for an engine load (I) may be done as follows: divide a NOₓ concentration (III) - reducing agent flow (IV) curve in three parts: α, β, and γ (see FIG. 4). Part α is a linear part with low amounts of reducing agent but high NOₓ emissions. Part β is a transition region between the linear region and a regimen of excess reducing agent addition. Part γ corresponds to excessive reducing agent addition, and is associated with unwanted reducing agent emissions (e.g. ammonia slip in case the reducing agent is, for example, urea). Unwanted reducing agent emissions occur when too much reducing agent is added, and not all reducing agent reacts with NOₓ in the exhaust gas stream. Reducing agent emissions are not desirable because they correspond to excessive reducing agent use, and they corresponds to increased pollution due to exhaust of unreacted reducing agent. An optimum reducing agent flow (II) is a flow between parts α and β, which corresponds to low NOₓ exhaust and no ammonia slip.

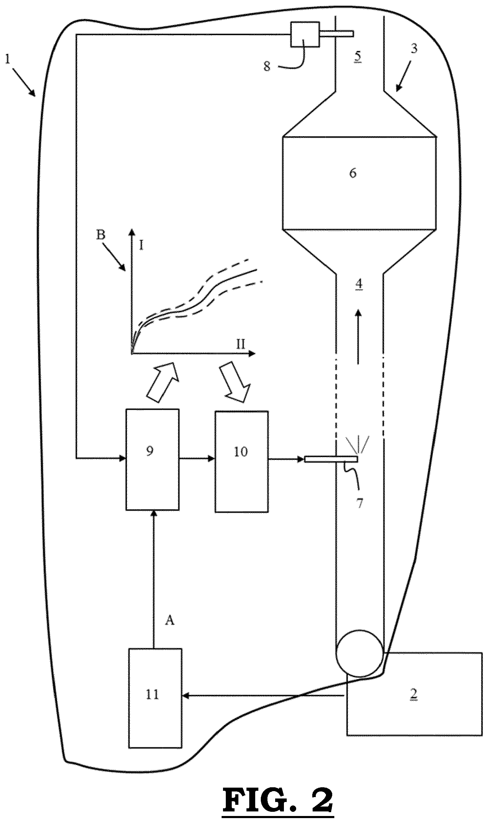

In some embodiments, the first mapping is changed automatically for optimum tuning of the reducing agent flow based on a NOₓ measurement obtained using the NOₓ-analyser (8), as shown in Fig. 2. In other words, in some embodiments, the engine load - urea flow mapping is adapted based on real-time NOₓ measurements.

In order to measure the amount of NOₓ left over in the purified exhaust gas, and to detect the amount of reducing agent to be injected at each engine load scenario to provide a desired NOₓ-conversion with a minimum level of exhaust of ammonia, a NOₓ-analyser (8) is arranged in the exhaust gas outlet (5). The NOₓ-analyser (8) may be arranged to measure the NOₓ present in the purified exhaust gas continuously or periodically. During non-testing of the engine (2), the mapping (B) is used to let the reducing agent injection system under the control of the SCR-process system (10) inject the appropriate amount of reducing agent into the exhaust gas stream to be purified. In order words, the mapping includes that the amount of reducing agent being injected into the exhaust gas coming from the engine and to be purified is changed, and the effect thereof on the amount of NOₓ present in the exhaust gas to be cleaned is checked by the NOₓ-analyser (8), through which it is possible to determine the optimum amount of reducing agent to be injected into the exhaust gas to be cleaned for a given engine load. The optimum amount of reducing agent to be injected is typically when all necessary NOₓ is removed out of the exhaust gas and no excess reducing agent exhaust from the exhaust outlet occurs. The mapping can be adapted in the sense that tests can be performed, typically automatically and continuously or at regular time intervals, to draw a new map. Once the new map is established, it is used until a next adaptation of the system is performed.

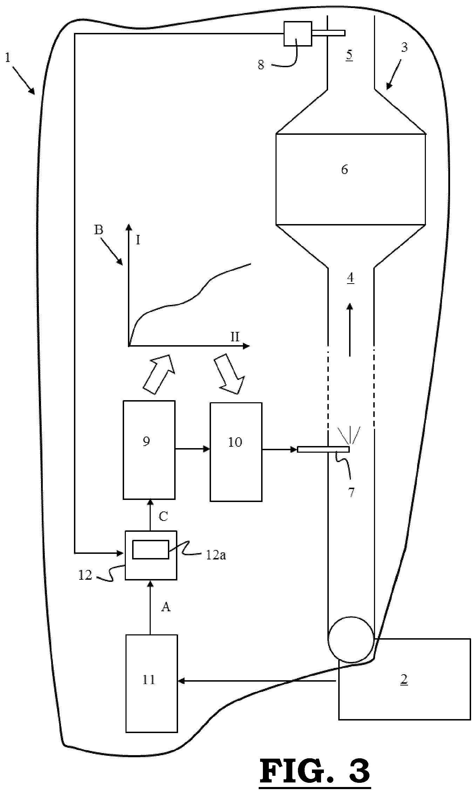

In retrofitted legacy systems, it may be difficult to adapt the engine load - urea flow mapping based on real-time NOₓ measurements. In order to overcome this issue, the significant engine load signal may be modified into a modified engine load signal based on real-time NOₓ measurements, as explained in more detail below and as exemplified in FIG. 3. In some embodiments, the significant engine load signal is modified by means of a control box (12). Accordingly, in some embodiments the system comprises a control box (12) that is arranged for modifying the incoming significant engine load signal (A) to a modified (or corrected) engine load signal (C) based on the measurements of the NOₓ-analyser (8). In other words, the measurements from the NOₓ-analyser (8) are fed back to this control box (12), and the control box (12) adapts the mapping (B) accordingly. Preferably, the control box (12) adapts the mapping (B) as discussed in the context of the present methods below. The modification of the engine load signal (A) to a modified engine load signal (C) is preferably done as discussed below, in the context of the present methods, and the modification can be done by means of a PLC (Programmable Logic Controller). Accordingly, in some embodiments, the control box comprises a PLC configured to modify the engine load signal (A) to a modified engine load signal (C). The control box (12) may include a display (12a) that is arranged for viewing at least the significant engine load signal (A) and the modified engine load signal (C). Optionally, other data related to the SCR-process such as amongst others the measured NOₓ, alarm texts, etc can be displayed. In some embodiments, the display (12a) can be used as input device to program the setup with the control box (12) and the NOₓ-analyser (8). In some embodiments, the display (12a) can be used as an interface between different people. The control box (12) may be mounted in the vicinity of the SCR control system (9). An example of such a system is shown in Fig. 3.

Further provided herein is a method for reducing the amount of nitrogen oxides in an exhaust gas of an internal combustion engine. The method involves receiving a nitrogen oxides concentration signal. The nitrogen oxides concentration signal is indicative of the nitrogen oxides concentration signal in a purified exhaust gas. In other words, the nitrogen oxides concentration signal preferably encodes a nitrogen oxides concentration in a purified exhaust gas which was measured earlier. The method also involves receiving an incoming significant engine load signal. The significant engine load signal is preferably measured, and represents the significant engine load, which is the mechanical resistance against which the engine acts. The incoming significant engine load signal is then modified based on the nitrogen oxides measuring signal. This results in a modified engine load signal. Then, an amount of reducing agent to be injected in the exhaust gas of the internal combustion engine is determined based on the nitrogen oxides concentration signal, the modified engine load signal, and a mapping. The mapping generally comprises a one-to-one relation between the modified engine load signal and a reference amount of injected reducing agent. Preferably, the reference amount of injected reducing agent corresponds to a specified nitrogen oxides reduction efficiency.

In some embodiments, the step of modifying the incoming significant engine load signal based on the nitrogen oxides measuring signal comprises a number of sub steps. In particular, a first sub step involves a comparison of the nitrogen oxides concentration in the purified exhaust gas to a reference nitrogen oxides concentration for the incoming significant engine load signal. If the nitrogen oxides concentration in the purified exhaust gas is higher than the reference nitrogen oxides concentration, the modified engine load signal is increased by a pre-determined amount. If the nitrogen oxides concentration in the purified exhaust gas is lower than the reference nitrogen oxides concentration, the modified engine load signal is decreased by a pre-determined amount.

In some embodiments, the mapping comprises a one-to-one relation between the modified engine load signal and urea flow. Preferably, the reducing agent flow increases monotonically with increasing engine load. Preferably, the reducing agent is urea-based. In some embodiments, the reducing agent is an aqueous urea solution, for example an aqueous urea solution according to norm IS022241. Alternatively, the reducing agent may be hydrous or anhydrous ammonia.

After the amount of reducing agent to be injected in the exhaust gas is determined, the exhaust gas may be contacted with reducing agent according to the previously determined amount of reducing agent. Preferably, the reducing agent is injected by means of a reducing agent injection system (7) which is controlled by an SCR-process system (10). In some embodiments, the amount of reducing agent may be expressed as a flow rate, or as a pre-determined amount.

In some embodiments, the reducing agent is injected into a selective catalytic reactor system, into a selective catalytic reactor, and/or into an exhaust gas inlet of the selective catalytic reactor system.

In some embodiments, the method is computer-implemented. This allows efficient execution of the methods. Further provided is a computer program product comprising program code instructions for implementing a method provided herein. Accordingly, systems can be efficiently programmed to execute a method provided herein. Further provided herein is a system configured for executing a method provided herein, which allows effective execution of the present methods.

## Claims

1. A system for reducing the amount of nitrogen oxides in exhaust gas of an internal combustion engine, comprising
- a selective catalytic reactor system comprising:
• a selective catalytic reactor arranged to catalytically convert the exhaust gas to a purified exhaust gas by reducing the amount of nitrogen oxides in the exhaust gas using a reducing agent;
• an exhaust gas inlet to lead exhaust gas from the internal combustion engine into the selective catalytic reactor;
• an exhaust gas outlet to lead the purified exhaust gas out of the selective catalytic reactor system; and;
• a nitrogen oxides analyser arranged in the exhaust gas outlet for measuring the amount of nitrogen oxides present in the purified exhaust gas;
- a reducing agent injection system comprising a container for storing reducing agent, an injector for injecting the reducing agent into the selective catalytic reactor system or the exhaust gas inlet of the selective catalytic reactor system thereby contacting the exhaust gas with the reducing agent, and a metering device for controlled injection of the reducing agent into the selective catalytic reactor system or the exhaust gas inlet of the selective catalytic reactor system;
- a machinery system arranged to determine a significant engine load signal; and;
- a process controller receiving information from the machinery system and the nitrogen oxides analyser and sending information to the reducing agent injection system;
**CHARACTERIZED IN THAT** the process is configured to
a) modify the incoming significant engine load signal based on the measured amount of nitrogen oxides present in the purified exhaust gas thereby generating a modified engine load signal,
b) map the modified engine load signal in function of a reference amount of injected reducing agent for a specified nitrogen oxides reduction efficiency; and
c) regulate the amount of reducing agent to be injected based on the results of step (b).

2. The system according to claim 1, wherein the process controller comprises a display arranged to at least view the significant engine load signal and the modified engine load signal.

3. The system according to claim 1 or 2, wherein the nitrogen oxides analyser is arranged for continuously or periodically measuring the amount of nitrogen oxides present in the purified exhaust gas.

4. The system according to any one of claims 1 to 3, wherein the internal combustion engine is a stationary or marine diesel engine.

5. Method for reducing the amount of nitrogen oxides in an exhaust gas of an internal combustion engine, the method comprising the following steps:
a. receiving a nitrogen oxides concentration signal, the nitrogen oxides concentration signal being indicative of a nitrogen oxides concentration in a purified exhaust gas;
b. receiving an incoming significant engine load signal;
c. modifying the incoming significant engine load signal based on the nitrogen oxides measuring signal, thereby obtaining a modified engine load signal;
d. determining an amount of reducing agent to be injected in the exhaust gas of the internal combustion engine based on the nitrogen oxides concentration signal, the modified engine load signal, and a mapping of the modified engine load signal as a function of a reference amount of injected reducing agent for a specified nitrogen oxides reduction efficiency.

6. The method according to claim 5, wherein step c comprises the following sub-steps:
ca. comparing the nitrogen oxides concentration in the purified exhaust gas to a reference nitrogen oxides concentration for the incoming significant engine load signal;
cb. if the difference between the nitrogen oxides concentration in the purified exhaust gas and the reference nitrogen oxides concentration is larger than a pre-determined upper value, increasing the modified engine load signal by a pre-determined first amount;
cc. if the difference between the nitrogen oxides concentration in the purified exhaust gas and the reference nitrogen oxides concentration is smaller than a pre-determined lower value, decreasing the modified engine load signal by a pre-determined second amount.

7. The method according to claim 5 or 6, wherein the mapping comprises a one-to-one relation between the modified engine load signal and urea flow.

8. The method according to any one of claims 5 to 7, wherein step d is followed by the step:
e. contacting the exhaust gas with a reducing agent according to the amount of reducing agent determined in step d.

9. The method according to claim 8, wherein step e comprises injecting a reducing agent into a selective catalytic reactor system or an exhaust gas inlet of the selective catalytic reactor system.

10. The method according to any one of claims 5 to 9, wherein step a is preceded by the step: measuring the nitrogen oxides concentration in a purified exhaust gas.

11. The method according to any one of claims 5 to 10, wherein step b is preceded by the step: measuring the significant engine load signal.

12. The method according to any one of claims 5 to 11, wherein the method is computer-implemented.

13. Computer program product comprising program code instructions for implementing a method according to any one of claims 5 to 11.

14. System according to any one of claims 1 to 4 configured for executing a method according to any one of claims 5 to 11.

## Patentansprüche

1. System zur Verringerung der Stickoxidmenge in den Abgasen eines Verbrennungsmotors, aufweisend
- ein selektives katalytisches Reaktorsystem aufweisend:
• einen selektiven katalytischen Reaktor, der dafür gestaltet ist, die Abgase katalytisch in gereinigte Abgase umzuwandeln, indem er die Menge an Stickoxiden in den Abgasen unter Verwendung eines Reduktionsmittels verringert;
• einen Abgaseinlass, um Abgase vom Verbrennungsmotor in den selektiven katalytischen Reaktor zu leiten;
• einen Abgasauslass, um die gereinigten Abgase aus dem selektiven katalytischen Reaktorsystem auszuleiten; und
• einen Stickoxidanalysator, der im Abgasauslass angeordnet ist, um die in den gereinigten Abgasen vorhandene Menge an Stickoxiden zu messen;
- ein Reduktionsmitteleinspritzsystem aufweisend einen Behälter zum Aufbewahren von Reduktionsmittel, einen Einspritzer zum Einspritzen des Reduktionsmittels in das selektive katalytische Reaktorsystem oder in den Abgaseinlass des selektiven katalytischen Reaktorsystems, wodurch die Abgase mit dem Reduktionsmittel in Kontakt gebracht werden, und eine Dosiervorrichtung für ein kontrolliertes Einspritzen des Reduktionsmittels in das selektive katalytische Reaktorsystem oder den Abgaseinlass des selektiven katalytischen Reaktorsystems;
- ein maschinelles System, das dafür gestaltet ist, ein maßgebliches Motorlastsignal zu bestimmen; und
- eine Prozesssteuerung, welche Informationen vom maschinellen System und dem Stickoxidanalysator empfängt und Informationen zum Reduktionsmitteleinspritzsystem sendet;
**dadurch gekennzeichnet, dass** der Prozess dafür ausgelegt ist
a) das eingehende maßgebliche Motorlastsignal beruhend auf der gemessenen Menge an Stickoxiden, die in den gereinigten Abgasen vorhanden sind, zu ändern, und dadurch ein geändertes Motorlastsignal zu erzeugen,
b) das geänderte Motorlastsignal in Abhängigkeit einer Referenzmenge eingespritzten Reduktionsmittels für eine spezifizierte Stickoxidverringerungseffizienz abzubilden; und
c) die Menge einzuspritzenden Reduktionsmittels beruhend auf den Ergebnissen von Schritt (b) zu regeln.

2. System nach Anspruch 1, wobei die Prozesssteuerung eine Anzeige aufweist, die dafür gestaltet ist, mindestens das maßgebliche Motorlastsignal und das geänderte Motorlastsignal zu betrachten.

3. System nach Anspruch 1 oder 2, wobei der Stickoxidanalysator dafür gestaltet ist, fortlaufend oder in regelmäßigen Abständen die Menge an Stickoxiden, die in den gereinigten Abgasen vorhanden sind, zu messen.

4. System nach einem der Ansprüche 1 bis 3, wobei der Verbrennungsmotor ein stationärer oder ein Schiffsdieselmotor ist.

5. Verfahren zur Verringerung der Stickoxidmenge in einem Abgas eines Verbrennungsmotors, das Verfahren umfassend die folgenden Schritte:
a. das Empfangen eines Stickoxidkonzentrationssignals, wobei das Stickoxidkonzentrationssignal eine Stickoxidkonzentration in einem gereinigten Abgas anzeigt;
b. das Empfangen eines eingehenden maßgeblichen Motorlastsignals;
c. das Ändern des eingehenden maßgeblichen Motorlastsignals beruhend auf dem Stickoxidmesssignal, wodurch ein geändertes Motorlastsignal erlangt wird;
d. Bestimmen einer Menge an Reduktionsmittel, das in die Abgase des Verbrennungsmotors einzuspritzen ist, beruhend auf dem Stickoxidkonzentrationssignal, dem geänderten Motorlastsignal und einer Abbildung des geänderten Motorlastsignals in Abhängigkeit einer Referenzmenge eingespritzten Reduktionsmittels für eine spezifizierte Stickoxidverringerungseffizienz.

6. Verfahren nach Anspruch 5, wobei Schritt c die folgenden Teilschritte umfasst:
ca. das Vergleichen der Stickoxidkonzentration im gereinigten Abgas mit einer Referenzstickoxidkonzentration für das eingehende maßgebliche Motorlastsignal;
cb. falls die Differenz zwischen der Stickoxidkonzentration im gereinigten Abgas und der Referenzstickoxidkonzentration größer ist, als ein vorher festgelegter oberer Wert, das Erhöhen des geänderten Motorlastsignals in einem vorher festgelegten ersten Ausmaß;
cc. falls die Differenz zwischen der Stickoxidkonzentration im gereinigten Abgas und der Referenzstickoxidkonzentration geringer ist, als ein vorher festgelegter unterer Wert, das Verringern des geänderten Motorlastsignals in einem vorher festgelegten zweiten Ausmaß;

7. Verfahren nach Anspruch 5 oder 6, wobei das Abbilden ein Eins-zu-Eins-Verhältnis zwischen dem geänderten Motorlastsignal und einem Harnstofffluss umfasst.

8. Verfahren nach einem der Ansprüche 5 bis 7, wobei nach Schritt d der folgende Schritt ausgeführt wird:
e. in Kontakt Bringen der Abgase mit einem Reduktionsmittel in Einklang mit der in Schritt d bestimmten Menge an Reduktionsmittel.

9. Verfahren nach Anspruch 8, wobei Schritt e das Einspritzen eines Reduktionsmittels in ein selektives katalytisches Reaktorsystem oder einen Abgaseinlass des selektiven katalytischen Reaktorsystems umfasst.

10. Verfahren nach einem der Ansprüche 5 bis 9, wobei vor Schritt a der folgende Schritt ausgeführt wird: das Messen der Stickoxidkonzentration in einem gereinigten Abgas.

11. Verfahren nach einem der Ansprüche 5 bis 10, wobei vor Schritt b der folgende Schritt ausgeführt wird: das Messen des maßgeblichen Motorlastsignals.

12. Verfahren nach einem der Ansprüche 5 bis 11, wobei das Verfahren computerimplementiert ist.

13. Computerprogrammprodukt aufweisend Programmkodeanweisungen zum Umsetzen eines Verfahrens im Einklang mit einem der Ansprüche 5 bis 11.

14. System nach einem der Ansprüche 1 bis 4, das dafür gestaltet ist, ein Verfahrens nach einem der Ansprüche 5 bis 11 auszuführen.

## Revendications

1. Système de réduction de la quantité d'oxydes d'azote dans du gaz d'échappement d'un moteur à combustion interne, comprenant
- un système de réacteur catalytique sélectif comprenant :
• un réacteur catalytique sélectif agencé pour transformer catalytiquement le gaz d'échappement en un gaz d'échappement purifié en réduisant la quantité d'oxydes d'azote dans le gaz d'échappement au moyen d'un réducteur ;
• une entrée de gaz d'échappement pour conduire du gaz d'échappement depuis le moteur à combustion interne à l'intérieur du réacteur catalytique sélectif ;
• une sortie de gaz d'échappement pour conduire le gaz d'échappement purifié hors du système de réacteur catalytique sélectif ; et
• un analyseur d'oxydes d'azote disposé dans la sortie de gaz d'échappement pour mesurer la quantité d'oxydes d'azote présents dans le gaz d'échappement purifié ;
- un système d'injection de réducteur comprenant un récipient pour stocker un réducteur, un injecteur pour injecter le réducteur dans le système de réacteur catalytique sélectif ou l'entrée de gaz d'échappement du système de réacteur catalytique sélectif pour mettre ainsi le gaz d'échappement en contact avec le réducteur, et un dispositif de dosage pour une injection contrôlée du réducteur dans le système de réacteur catalytique sélectif ou l'entrée de gaz d'échappement du système de réacteur catalytique sélectif ;
- un système de machinerie agencé pour déterminer un signal de forte charge moteur ; et
- un contrôleur de procédé recevant des informations depuis le système de machinerie et l'analyseur d'oxydes d'azote et envoyant des informations au système d'injection de réducteur ;
**CARACTERISE EN CE QUE** le procédé est configuré pour
a) modifier le signal entrant de forte charge moteur sur la base de la quantité mesurée d'oxydes d'azote présents dans le gaz d'échappement purifié pour générer ainsi un signal de charge moteur modifié ;
b) mettre le signal de charge moteur modifié en correspondance avec une quantité de référence de réducteur injecté pour une efficacité de réduction des oxydes d'azote spécifiée ; et
c) réguler la quantité de réducteur à injecter sur la base des résultats de l'étape (b).

2. Système selon la revendication 1, dans lequel le contrôleur de procédé comprend un écran agencé pour visualiser au moins le signal de forte charge moteur et le signal de charge moteur modifié.

3. Système selon la revendication 1 ou 2, dans lequel l'analyseur d'oxydes d'azote est agencé pour mesurer de façon continue ou périodique la quantité d'oxydes d'azote présents dans le gaz d'échappement purifié.

4. Système selon l'une quelconque des revendications 1 à 3, le moteur à combustion interne étant un moteur diesel stationnaire ou marin.

5. Procédé de réduction de la quantité d'oxydes d'azote dans un gaz d'échappement d'un moteur à combustion interne, le procédé comprenant les étapes suivantes :
a. recevoir un signal de concentration d'oxydes d'azote, le signal de concentration d'oxydes d'azote étant représentatif d'une concentration d'oxydes d'azote dans un gaz d'échappement purifié ;
b. recevoir un signal entrant de forte charge moteur ;
c. modifier le signal entrant de forte charge moteur sur la base du signal de mesure des oxydes d'azote, pour obtenir ainsi un signal de charge moteur modifié ;
d. déterminer une quantité de réducteur à injecter dans le gaz d'échappement du moteur à combustion interne sur la base du signal de concentration d'oxydes d'azote, du signal de charge moteur modifié, et d'une mise en correspondance du signal de charge moteur modifié avec une quantité de référence de réducteur injecté pour une efficacité de réduction des oxydes d'azote spécifiée.

6. Procédé selon la revendication 5, dans lequel l'étape c comprend les sous-étapes suivantes :
ca. comparer la concentration d'oxydes d'azote dans le gaz d'échappement purifié à une concentration d'oxydes d'azote de référence pour le signal entrant de forte charge moteur ;
cb. si la différence entre la concentration d'oxydes d'azote dans le gaz d'échappement purifié et la concentration d'oxydes d'azote de référence est plus grande qu'une valeur supérieure prédéterminée, augmenter le signal de charge moteur modifié d'une première quantité prédéterminée ;
cc. si la différence entre la concentration d'oxydes d'azote dans le gaz d'échappement purifié et la concentration d'oxydes d'azote de référence est plus petite qu'une valeur inférieure prédéterminée, diminuer le signal de charge moteur modifié d'une deuxième quantité prédéterminée.

7. Procédé selon la revendication 5 ou 6, dans lequel la mise en correspondance comprend une relation biunivoque entre le signal de charge moteur modifié et l'écoulement d'urée.

8. Procédé selon l'une quelconque des revendications 5 à 7, dans lequel l'étape d est suivie par l'étape :
e. mettre le gaz d'échappement en contact avec un réducteur en fonction de la quantité de réducteur déterminée à l'étape d.

9. Procédé selon la revendication 8, dans lequel l'étape e comprend l'injection d'un réducteur dans un système de réacteur catalytique sélectif ou une entrée de gaz d'échappement du système de réacteur catalytique sélectif.

10. Procédé selon l'une quelconque des revendications 5 à 9, dans lequel l'étape a est précédée par l'étape : mesurer la concentration d'oxydes d'azote dans un gaz d'échappement purifié.

11. Procédé selon l'une quelconque des revendications 5 à 10, dans lequel l'étape b est précédée par l'étape : mesurer le signal de forte charge moteur.

12. Procédé selon l'une quelconque des revendications 5 à 11, le procédé étant mis en oeuvre par ordinateur.

13. Produit-programme informatique comprenant des instructions de code de programme pour mettre en oeuvre un procédé selon l'une quelconque des revendications 5 à 11.

14. Système selon l'une quelconque des revendications 1 à 4 configuré pour exécuter un procédé selon l'une quelconque des revendications 5 à 11.
